# EUROPEAN PATENT SPECIFICATION

(11) **EP 1 428 987 B1**
(45) Date of publication and mention of the grant of the patent: **27.10.2010**
(21) Application number: 03009306.6
(22) Date of filing: 24.04.2003
(51) Int. Cl.: F01K 3/24, F23G 5/46

(54) **Method and plant for improving consumption of fossil fuels in conventional electrical power plants**
Methode und Vorrichtung zur Verbesserung des Verbrauchs von fossilen Brennstoffen in konventionellen elektrischen Kraftwerken
Méthode et installation permettant d'améliorer la consommation de carburant fossile dans les centrales électriques conventionnelles

(30) Priority: 11.12.2002 IT MI20022618
(43) Date of publication of application: 16.06.2004
(73) Proprietor: ECODECO S.R.L., 20159 Milan (IT)
(72) Inventor: Natta, Giuseppe, 27010 Giussago (Pavia) (IT); Donati, Gianni, 27010 Giussago (Pavia) (IT)
(74) Representative: Minoja, Fabrizio

(56) References cited:
- EP-A- 0 399 104
- AT-B- 390 304

## Description

The present invention relates in general to the use of the heat produced by the combustion of solid waste or of non-conventional fuel derived therefrom and more generally of renewable energy sources for the improvement in consumption of non-renewable sources, such as fossil fuels, in conventional electrical power plants widely distributed and operating countrywide.

### State of the art

Methods are know for the use of biomasses, wastes, particularly municipal solid wastes (MSW), or at least of a fraction of the same, or fuels derived from waste (RDF) in order to obtain energy, generally electrical energy in that this is energy not necessarily useable in situ and available for distribution throughout the country.

These known methods involve combustion of the waste, previously broken up if necessary, in stoker grate, boiling fluidised bed and recirculating fluidised bed reactors with production of superheated steam to be expanded in a turbine coupled with an electrical energy generator according to the technique known in the field.

A main disadvantage of these known methods is represented by their low thermoelectric efficiency, in the region of 20% compared to the 40% efficiency of conventional thermoelectric power plants, due to the low temperatures and pressures obtainable in the steam pipes of the boiler super heater, which limits the enthalpy available in the steam turbine, and due to the small scale.

The low temperatures and pressures are related to the known problems of corrosion and scaling of the steam pipes in presence of chlorine compounds and of high quantities of ash.

The small scale is mainly due to the fact that the quantity of energy which can be obtained from waste produced in a certain area is from one to two orders of magnitude smaller than that consumed in the same area.

The small scale, together with the high costs of the machinery operating with often heterogeneous solids and in aggressive conditions, make an isolated plant for production of electrical energy from waste uneconomical.

The problem of the heterogeneity of the waste was recently tackled by preparing, in intermediate plants, a primed and homogeneous waste which can enable improved feeding of the plants and improved control of the combustion process.

When this prepared waste fulfils standards relating to the lower heat value and ash and water content, it is termed fuel obtained from waste or secondary fuel (SF) or non-conventional fuel or refuse-derived fuel (RDF).

These terms are to be considered herein below as synonyms of the same product.

Herein under, the term waste will refer both to municipal solid waste (MSW) from non-selective collection, from selective collection, fractions separated from this waste (SF or RDF), biomasses from set-aside land, and biomasses contained in waste or refuse from other agricultural and/or industrial processes and from the purification of effluent containing an organic and digestible fraction.

European patent EP 706839, in the name of the same Applicant, describes an energy-efficient method for the production from municipal solid waste of a secondary fuel (SF) with high lower heat value, which uses as energy for evaporating water the heat released by the aerobic fermentation of the putrescible fraction contained in the waste to be treated. The inorganic fractions (metals and glass), that during combustion produce ash, are separated. Since the weight of the waste prepared in this way is equal to approximately 50% of the original weight and the lower heat value is over double that of the input waste, a waste preparation process of the type mentioned above allows the energy contained in the original, untreated waste to be concentrated by approximately four times.

In this way intelligent transfer stations (ITS) can be built which enable the waste to be received locally and its energy to be concentrated in an SF which can be easily and economically transported to centralised plants for the production of electrical energy.

In Italian patent no. 1297234, in the name of the same Applicant, a method and apparatus are described for the preparation and transport to the end user of an SF.

In this way the problem of heterogeneity of the waste is solved, the heat value raised to values over 15.000 kJ/kg (3600 kcal/kg) and the problem of logistics and handling and feeding of solids improved, although the problem of low yields, small scale and high investments remains.

Contrarily large thermoelectric power plants, even without combined cycles, that is to say. with expansion of the combustion gases in gas turbines before use in the boiler for the production of steam, have efficiencies close to 40%.

The patent of the same Applicant, VI 2002 A 000180, therefore describes direct use of the heat of the SF combustion gasses, appropriately purified, in the boiler of the power plant, in order to supply said boiler with additional energy and at the same time regulate the flame temperature with the scope of reducing and controlling NOx (nitrous oxides) production.

A greater efficiency of electrical energy generation from the SF's by this method is claimed, compared to that which can be obtained from a dedicated small-scale plant.

The manner in which this heat transfer is performed at the real plant and the control methods to be used for combined operation of the two plants are not however described in detail.

EP 399104 describes a process for supplying heat to the plant by the waste combustion system according to the preamble of claim 1, mainly via steam at medium and low pressure sent directly to the turbine.

In the case of medium pressure however, since the steam is superheated, pressures and above all temperatures are required which can exceed the limits admitted in the waste plant.

Moreover the flue gases of the waste combustor are not recycled.

The use of surplus steam for heating the recycled condensates and afterburning of the burnt gasses in the boiler of the power plant are only foreseen as an option.

US 4852344 describes a process wherein the clean burnt gasses of a gas turbine are fed into the waste combustor. This method appears to suffer from considerable disadvantages linked to the aforementioned problems of corrosion of the waste combustor and consequently to the low quality of the steam produced and to the low electrical yields, corresponding to those of the cycle of the waste combustion plant (20 - 22%). In other words an efficient system such as the gas turbine is linked to a low-efficiency system such as the waste boiler and combustor.

At this point mention should be made of the fact that, in order to solve the MSW disposal and encourage its use, the energy produced from renewable sources is subject in some UE countries to "green certificates" whose value is in Italy in the range of 0.084 €/kWh and that the MSW or SFs derived therefrom might be considered at least 50% "green".

Therefore the technical and economic aspects of efficiency are affected, in addition to the fossil fuel saved (N.G. 163 €/kNm³), also by the premium paid via the "green certificates" to the producer of electrical energy from renewable sources.

### Description of the invention

The general object of the present invention is that of eliminating the disadvantages mentioned above and to make available a method, a plant and a system for management and control to obtain, simply and cleanly, with a high yield, electrical energy from waste, in particular SF, using large conventional thermoelectric power plants.

The main object of the present invention is therefore that of increasing, through the combination of an SF combustion plant with a conventional power plant, the technical and economic efficiency of the electrical power plant beyond the limits allowed by the prior art.

A further object of the invention is that of bringing the yields of conversion of the SFs into electrical energy to the typical levels of the steam cycle of the conventional power plant, allowing direct and indirect reduction, through the added value of the green certificates, in the consumption of fossil fuels.

Another object of the invention is that of allowing this operation to be performed with the SF combustion plant at constant load, whereas the power plant operates at different loads according to market demands, and identifying simple and adequate control and operation means.

Yet another object of the invention is that of making available a method and a plant for supplying to the thermoelectric power plant the energy contained in the SFs or solid waste in the form of clean fluids.

A further object is that of making available a method and a plant which enables use of existing sites for installation of plants for production of energy from solid waste, in particular from SFs.

An additional object is that of making available a method and a plant for incineration with cogeneration of electrical energy from waste, prepared waste or secondary fuels, economical and easy to manage.

A particular object of the invention is that of allowing absorption of all the pressurised steam produced by the waste combustion plant.

These objects and others which are to be explained in greater detail herein below are achieved by a method for the use of waste, in particular urban solid waste, in a combined cycle thermoelectric power plant, wherein electrical energy is produced by combustion of fossil fuels, with the features of the annexed independent claim 1.

More particularly, said method generally comprises the following working phases:
a) preparation of waste for combustion;
b) combustion of the waste thus prepared so as to obtain a flue gas with a predetermined excess of air and temperature, and a quantity of steam at predetermined heat content (enthalpy) levels;
c) purification of said gas mixture;
d) use of said purified gas mixture in place of all or part of the burnt gasses recycled to the power station boiler;
e) use of said steam produced in the SF combustor in place of all or part of the extracted steam from the power station turbine;
wherein said phase b) of waste combustion is carried out with a predetermined excess of air so as to achieve complete combustion of the waste and obtain a flue gas with an oxygen content close to that of the gases recycled to the boiler
wherein said phase d) of use of said purified gas mixture takes place in said boiler to such an extent as to allow total destruction also of the micropollutants eventually present after purification and a further reduction, in an environment with high temperature and low oxygen, in the residual traces of NOx (nitrous oxides) produced in SF combustor and power station boiler;
wherein said phase e) of use of the steam produced is performed on the condensates recycled from the condenser of the turbine to the boiler and more particularly in the preheaters of said recycled condensates with replacement of all or part of the steam extracted from the turbine.

According to a further aspect of the invention, a plant is provided for implementation of the said method, in accordance with claim 14.

More particularly this plant generally comprises:
- means for preparation of said waste for combustion;
- means for combustion of said prepared waste so as to obtain a flue gas at an appropriate temperature to allow purification and a quantity of steam corresponding to the heat balance of the combustor;
- means for purification of said gas mixture;
- means for introduction of said purified mixture as part of the hot gas recycled to the steam boiler of said plant;
- means for introduction and distribution of the steam produced in the various preheaters of the recycled condensates and simultaneous disabling of the corresponding extraction steam streams from the turbine.

According to a further aspect a control system can be provided for management of the plant, comprising:
- a system for control of the SF combustion plant such as to allow operation of said plant at constant load with production of predetermined quantities of hot flue gases at fixed and controlled temperatures and oxygen and micropollutant concentrations, and the production of quantities of steam at a constant and predetermined heat level and flow rate;
- a system for control of the power plant which allows operation of the plant as an independent entity and is capable at the same time of managing the supplies of fluids provided by the SF plant and of distributing them in the various points of use, disabling and/or regulating internal recycling and turbine extractions and hence the flow of the recycled condensates and the feeding of fossil fuel to the combustor in accordance with the load and process restraints imposed on the power plant according to the market demand for electrical energy;
- a system of management of the start up and shut down for restoring normal operating conditions.

This method and this plant enable a conventional thermoelectric power plant to be fed with a clean fluid, free from particulate and which observes environmental regulations regarding stack emissions.

Moreover any subsequent combustion in the boiler of the plant allows further reduction and/or complete destruction of any micropollutants, therefore well below legal limits, which may be present in the hot gases from the SF combustion plant.

Moreover the method and plant according to the present invention enable the yields of conversion of waste into electrical energy to be increased from the typical ones of waste-to-electrical energy production plants to yield values close to those which can be obtained in the steam cycle of the electrical power plant.

Simultaneously, since the waste combustion plant according to the present invention is a plant which does not comprise the heat cycle for the production of electrical energy and is integrated with a larger and often pre-existing combustion plant, the investment costs are incomparably lower compared to a stand alone SF combustion plant with electrical energy production.

Nevertheless the greatest advantage is obtained in the electrical power plant where the supply of external energy at competitive costs and with a premium in terms of green certificates means that the system of the SF combustor with the electrical power plant can be considered a new technology capable of ensuring the production of electrical energy at competitive costs on the market.

### Brief description of the drawings

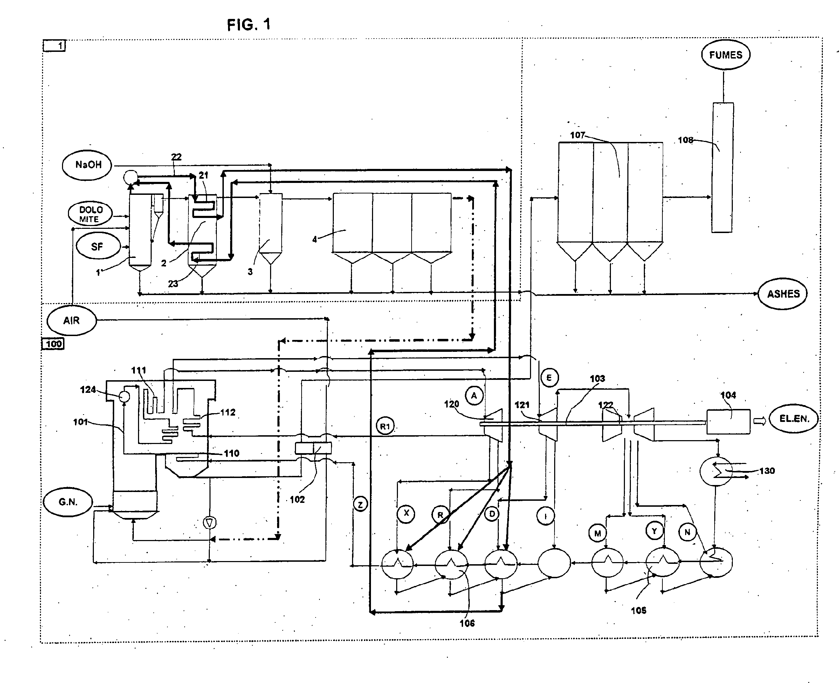

Additional features and advantages of the invention will be made clearer from the following detailed description of a method, a plant and control system for use of SFs in conventional thermoelectric power plants, given by way of a non-limiting example, with the aid of the drawing which shows a process diagram of the combined plant of an SF combustor and of an electrical power plant, wherein the controlled SF combustor is capable of producing purified hot gasses and saturated superheated steam to be used in the power plant.

### Detailed description of a preferred embodiment

With reference to the accompanying drawing, reference numeral 1 denotes a plant for use of SF for the production of hot gases and steam according to the present invention, linked to a conventional thermoelectric power plant denoted by reference numeral 100.

The power plant 100 consists of a boiler 101, a Ljungstrom heat exchanger 102, a steam turbine 103 consisting of three coaxial stages (120, 121, 122), connected to a generator of electrical energy 104, two series of low-pressure 105 and high-pressure 106 preheaters, and an electro filter 107 for removing dust from the gases before sending to the stack 108.

The boiler 101 is of the type with diaphragm walls and steam drum 124, for collecting the recycled condensates Z preheated in the preheaters 105, 106 and in the economiser 110. The boiler produces saturated steam which, from the steam drum 124, is sent to the superheaters 111 for the production of high-pressure steam A.

It is also equipped with a reheater 112 for the steam R1 bled from the high-pressure stage of the turbine 120.

The gasses leaving the boiler at approximately 375°C and containing approximately 2.5-3.5% oxygen are cooled in the Ljungstrom 102 at temperatures of around 120 - 140°C before sending to the electric filters 107 and subsequent emission at the stack 108.

Part of these hot burnt gasses are recycled to the boiler and part of these recycled burnt gasses are fed, together with the hot air, to the burner, with the aim of reducing the flame temperature and controlling the formation of NOx.

The high-pressure superheated steam A leaving the superheater 111 is sent to the high-pressure turbine 120 and the reheated steam E leaving the reheater 112 is sent to the medium-pressure turbine 121.

The steam from the medium-pressure turbine is expanded in the low-pressure turbine 122 and goes to the condenser 130 operating at temperatures even close to 15°C in the winter months.

Extractions X and R are performed on the high-pressure turbine 120, extractions D and I on the medium-pressure turbine 121 and M, Y and N on the low-pressure turbine 122.

The plant can operate at full load producing 320 MW and at low loads with a technical minimum of 70 MW according to grid demands at seasonal, weekly and day/night rates.

The plant 1 for use of secondary fuel for the production of electrical energy according to the present invention, combined with the thermoelectric power plant 100, comprises a combustor 1' with fluidised bed or recirculating bed cooled with water pipes for the production of saturated steam and an exchanger 2, consisting of a system of superheaters 21 and an economiser 22 for cooling the flue gases and preheating the recycled condensates and a purification system comprising neutralisation 3 and dust removal 4 of the gasses before sending them to the thermoelectric power plant 100.

Advantageously the combustor 1' is for example of the boiling fluidised bed or recirculating bed type, operating with sand, magnesium carbonate and dolomite at temperatures between 700°C and 900°C, preferably close to 850°C.

The gasses leaving the economiser 2 have a temperature between 150 and 500°C, preferably between 200 and 400°C and in any case such as to allow subsequent purification.

The excess of air in relation to the stoichiometric value is between the stoichiometric value and 200% and preferably such as to guarantee a concentration of oxygen in the gasses around 6% in volume.

The hot gases from heat recovery 2 are neutralised in a post-treatment chamber 3 with soda in solution or with soda vapour or with basic carbonates or oxides to remove the sulphur and chlorine not retained in the fluidised bed by the neutralising agents present.

Dust removal 4 is performed with bag filters or by means of electro filters at temperatures between 150°C and 500°C and preferably between 200 and 400°C.

Any traces of micropollutants present can be eliminated or reduced during subsequent combustion in the boiler of the electrical power plant and cannot form again, the possible precursors having been separated during neutralisation 3 and filtering 4.

Moreover, again before filtering 4, cold false air can be fed in order to regulate the temperature and, if necessary, enrich the oxygen.

The neutralised and filtered gas is sent onto the recycled gas stream of the boiler 101 and can be in such a quantity as to replace it completely.

The saturated steam leaving the superheater 21 is sent to the recycle preheaters 106 where it can replace all or part of the steam extractions X, R and D.

### Example 1

A combustion plant, fed with SF having a lower heat value of 16700 kJ/kg (4000 kcal/kg), such as the one illustrated, is considered, equipped with a recirculating bed combustor 1', a heat recuperator 2, a neutralisation tower 3 and an electric filter 4, and with capacity for burning 20 t/h of SF.

The plant is capable of producing about 200 t/h of purified flue gases within the limits imposed on environmental emissions, with a 6% oxygen content and temperature of 400°C and 98 t/h of superheated steam at 400°C and 4 MPa (40 Bar).

Approximately 4 t/h of ash are also produced, to be inertisized and discharged.

The power plant of the application is a 320 MW group, such as the one illustrated schematically.

From measurements performed during controlled operation, the burner of the plant boiler consumes 77.7 kNm³/h of N.G. with a lower heat value of 34070 kJ/Nm³ (8143 kcal/Nm³) and produces 1239 t/h of flue gases which go to the Ljungstrom at 375°C and leave the stack 108 at 145°C.

Approximately 200 t/h of the burnt gasses leaving the boiler are recycled to the boiler hopper and part of them mixed with the preheated air so as to have a concentration of oxygen in the combustion air of around 18.5%.

In this condition the boiler produces 1025 t/h of high-pressure steam (T= 537°C, P=17.3 MPa, 173 bar) and 785 t/h of reheated steam at 543°C and 3.5 MPa (35 bar) which, having expanded in the turbine, supplies 321 MW of electrical power to the alternator.

The combination of the two plants involves gradual reduction in the flow rate of the boiler gas recirculating fan and full replacement of the recycled gas with the gasses from the SF plant.

The extraction R is also turned off, whose flow rate of 74 t/h of steam at 3.7 MPa (37 bar) and 320°C is replaced with the 98 t/h of steam at 400°C produced by the SF plant.

In these conditions the power supplied by the turbine tends to increase and, if it is to be maintained constant at 321 MW, the quantity of high-pressure steam A has to be reduced and it therefore becomes 975 t/h.

The overall result of this operation is the sending to the boiler, which has already imported heat with SF combustion gasses, of a quantity of condensate to be evaporated lower than that of normal operation and hotter by approximately 13°C.

The consumption of N.G. is reduced to 70.9 kNm³/h and therefore by 6.8 kNm³/h approximately compared to normal operation.

28 MW of power is obtained from the SFs, approximately 9% of the total produced by the power plant group with specific production of approximately 1.4 kWh/kg of SF.

The added value of this power with the 50% green certificates at an estimated price of 0.084€/kWh is 1180 €/h which, with a N.G. price of 163 k€/Nm³, is equivalent to additional 7.2 kNm³/h of N.G., for a total equivalent of 14 kNm³/h saved that is 18.5% less energy consumption than the normal power plant operation.

### Example 2

The SF combustion plant operating in the same conditions of example 1 was considered, but with the power plant running at a capacity of 224 MW.

In normal operating conditions the burner of the plant boiler consumes 51 kNm³/h of N.G. with low heat value of 34900 kJ/Nm³ (8340 kcal/Nm³) and produces 858 t/h of flue gases.

Approximately 200 t/h of the gasses leaving the boiler are recycled to the boiler hopper and mixed with the preheated air so as to have a concentration of oxygen in the combustion air of around 18.5%.

In this condition the boiler produces 679 t/h of high-pressure steam (T = 539°C, P = 17.3 MPa, 173 bar) and 532 t/h of reheated steam at 543°C and 2.4 MPa (24 bar) which, expanded in the turbine, generates 224.5 MW of electrical power at the alternator.

In combined operation gas recycling is turned off and turbine extraction X is also turned off, whose flow rate of 70 t/h of steam at 5.2 Mpa (52 bar) and 390°C is replaced with the 98 t/h of steam at 400°C produced by the SF plant.

In order to maintain production constant at 224 MW, the quantity of high-pressure steam A has to be reduced to 624 t/h; in these conditions the consumption of N.G. is reduced to 44.5 kNm³/h and therefore by 6.5 kNm³/h approximately compared to normal operation.

The power obtained from the SF is approximately 29 MW, equal to approximately 13% of the total produced by the plant with specific production of approximately 1.43 kWh/kg of SF.

The added value of this power with the green certificates gives a total equivalent of 13.9 kNm³/h saved in relation to normal operation that is 27% economic advantage.

### Example 3

The same condition of the plant given in the previous examples was considered, although with the electrical power plant operating at 130 MW with consumption of N.G. of 29.5 kNm³/h.

In this case the turbine extractions X = 32 t/h, R = 18 t/h, D = 16 t/h, have mass and heat content smaller than the supply of steam from SF.

The imported steam is divided in the current flow rate ratios and all extractions are turned off.

The flow rate of the high-pressure steam A is reduced from 374 t/h to 318 t/h and the temperature of the recycled condensate Z is controlled, having risen by 50°C yet well below the boiling point at the pressure of the circuit.

The methane saved is approximately equal to the previous amount (6.9 kNm³/h) and likewise the power produced from the SF (30 MW, 1.5 kWh/kg), 23% in relation to normal operation.

The added value of this power with the green certificates gives a total equivalent of 14.7 kNm³/h saved compared to normal operation, equal to 50% saving.

### Example 4

The same condition of the plant given in the previous examples was considered, although with the electrical power plant operating at the minimum load of 70 MW with consumption of N.G. of 17.4 kNm³/h.

In this case the turbine extractions are X = 16 t/h, R = 8.6 t/h, D = 7.5 t/h, with quantity and heat content considerably smaller than the supply of steam from SF.

It was therefore necessary to transfer approximately 39 t/h of steam to other utilities of the plant and to distribute the remaining extra steam available in the current flow rate ratios.

In these conditions the recycling temperature Z rises close to the boiling limit at the circuit pressure and the control system has to trigger automatically.

Nonetheless the saving of N.G. is 4.2 kNm³/h, 24% less compared to normal operation and, with the addition of green certificates, 48% less.

From what is stated above and for the cases shown it can be seen that the combination of the SF combustion plant with a conventional electrical power plant allows a 9 to 24% reduction in the actual consumption of fossil fuel and, taking account of the 50% premium on electric energy produced fro SF and given by green certificates contribution, from 18 to 48% in equivalent N.G. terms with the highest percentages obtained in reduced load operations.

The yield in kWh/kg of SF is around 1.4 - 1.5 kW/kg of SF and therefore 40 - 50% higher than that obtainable from an isolated plant for SF combustion and production of electrical energy.

Combination of the two systems requires an accurate control system for ensuring observance of the process restraints whereof some applications were mentioned in the example only by way of explanation.

For example, in the case of a shutdown of the plant 100, the gases of the SF combustor 1' are constantly monitored for emission into the environment and can be sent to the stack 108 of the plant.

In the case of shutdown of the SF combustor 1', the plant automatically restores steam extractions and boiler recycling to operate in normal service conditions.

In addition to the improved plant operation, a reduction in the investments in the SF combustion plant is obtained due to the lack of electrical energy production facilities and to the larger scale.

A further advantage arises from the fact that new sites need not be found for locating waste incinerators, also allowing a solution to the problem of locating these plants, which would be replaced by auxiliary plants installed at existing power plants.

According to current Italian legislation, which generally provides incentives for the use of renewable sources for energy production, when the production share in a plant of this type of source is higher than 4%, the plant can be classified as user of renewable sources with a considerable positive impact on the environment.

Since approximately 50% of the secondary fuel is composed of classified materials, for renewable energy purposes, thermal power plants which are capable of producing at least 4% of the energy with these sources are classified as users of renewable sources and authorised to issue the relevant certificate, enjoying benefits in addition to the savings in fuel and an even greater economic efficiency is achieved.

## Claims

1. Method for the use of waste, in particular municipal solid waste, in a thermoelectric power plant (100) wherein the primary energy is supplied by the combustion of fossil fuels, wherein waste is combusted in a combustion reactor (1') with appropriately controlled air flow rate, the flue gases cooled and purified and said purified flue gases mixed with the air used in said power plant, and wherein pressurised steam is produced by said waste combustion reactor, the pressurised steam being produced at temperatures such as to allow transfer of heat to the high-pressure pre-heaters (106) to heat the water feeding the boiler (101) of said plant (100), **characterised in that** said steam is extracted from the turbine of the plant and is passed to said pre-heaters and, according to the load of the plant, said extracted steam is reduced or totally eliminated so as to absorb all the steam produced by said waste combustion reactor (1') in said pre-heaters.

2. Method according to claim 1, **characterised in that** said temperature of said steam is between 300°C and 500°C for the transfer of heat to the high-pressure pre-heaters and preferably around 400°C and at a pressure compatible with that which can be achieved in said pre-heaters and in said waste combustion reactor (1'), typically around 4 Mpa (40 bar).

3. Method according to any one of the previous claims, wherein the waste is combusted in said combustion reactor at constant load and with production of a predetermined quantity of hot combustion gases and of steam whereas the power plant operates at variable load according to the market demands for energy.

4. Method according to any one of the previous claims, wherein the maximum quantity of steam which can be fed to said pre-heaters is such as not to heat the condensates recycled to the boiler at a temperature close to that of evaporation in the circuit, with special reference to the minimum load conditions of the power plant.

5. Method according to any one of the previous claims, **characterised in that** the waste is combusted without excess air or with excess air within a range equal to approximately 0-200% and typically around 70%.

6. Method according to claim 1, **characterised in that** said purification of the flue gases is carried out by means of neutralisation with a base and subsequent filtering.

7. Method according to claim 1, **characterised in that** the cooled and purified flue gases are mixed with the combustion air of the power plant so as to replace at least in part recycling of the combustion gases of the power plant, aimed at reducing the NOx.

8. Method according to claim 1, **characterised in that** said phase of purification of the flue gases is carried out until achieving a content of dust, inorganic acid compounds, condensed aromatic polycyclic compounds and chlorinated organic compounds lower than the predetermined threshold values and compatible with emission into the environment.

9. Method according to claim 1, **characterised in that** the waste is subjected to a preliminary treatment before its combustion so as to prepare a secondary fuel (SF).

10. Method according to claim 9, **characterised in that** pre-treatment of said secondary fuel (SF) comprises at least one phase of extraction of metals and/or inert material from the waste.

11. Method according to claim 10, **characterised in that** the pre-treatment of said secondary fuel (SF) comprises a phase of forced aerobic digestion of the waste.

12. Plant for the use of waste in a thermoelectric power plant (100) wherein the plant comprises:
- a primary combustor (101) for fossil fuel,
- a circuit for feeding comburent air at a predetermined temperature,
- a multistage steam turbine (103),
- preheaters (105, 106)
- a waste combustion plant (1),
and wherein said waste plant comprises:
- means for the preparation of waste for combustion;
- means for the combustion of waste consisting for example of a fluidised bed combustion reactor (1') with a circuit for cooling by means of circulation of a coolant fluid;
- means for cooling the flue gases to a temperature lower than the maximum temperature compatible with purification;
- means for purification of said cooled flue gases;
- means for mixing said purified and cooled flue gases with the combustion air of the power plant,
- means for the production of pressurised steam, and
- means for sending said pressurised steam from said waste combustion reactor (1') into said pre-heaters for heating the water which feeds said primary combustor (101), **characterised in that** said plant further comprises:
- means for extracting the steam from said turbine (103) and passing it to said pre-heaters (105, 106), and
- means for gradual turning-off of extractions from the plant turbine, according to load, so as to absorb all the pressurised steam produced by said waste combustion reactor (1') in said preheaters.

13. Plant according to claim 12, **characterised in that** it comprises means for feeding air to a waste combustion fluidised bed combustion reactor (1'), means for regulating said feeding means to modify the excess air within a range between 0 and 200% and approximately equal to 70%.

14. Plant according to claim 12, **characterised in that** said means for mixing the purified and cooled flue gases with the combustion air of the main combustor (101) of the power plant are set up to replace at least in part the recycling of the combustion burnt gases aimed at reducing the NOx.

15. Plant according to claim 12, **characterised in that** said purification means comprise filtering means.

16. Plant according to claim 12, **characterised in that** said means for the preparation of waste comprise means for the preparation of a secondary fuel (SF) from said waste.

17. Plant according to claim 17, **characterised in that** said means for the preparation of said secondary fuel comprise a plant for forced aerobic fermentation of said waste.

## Patentansprüche

1. Verfahren für die Verwendung von Abfall, insbesondere von festem Abfall einer Gemeinde, in einem thermoelektrischen Kraftwerk (100), wobei die primäre Energie durch die Verbrennung von fossilem Brennstoff zugeführt wird, wobei der Abfall in einem Verbrennungsreaktor (1') mit einer geeignet gesteuerten Luftströmungsrate verbrannt wird, wobei die Abgase gekühlt und gesäubert und die gesäuberten Abgase mit der Luft, welche in dem Kraftwerk gebraucht wird, gemischt wird, und wobei unter Druck stehender Dampf durch den Abfallverbrennungsreaktor erzeugt wird, wobei der unter Druck stehende Dampf bei Temperaturen erzeugt wird, um eine Übertragung von Wärme auf die Hochdruck-Vorheizvorrichtungen (106) zu ermöglichen, um das Wasser, welches dem Kessel (101) des Kraftwerks (100) zugeführt wird, zu erhitzen, **dadurch gekennzeichnet, dass** der Dampf von der Turbine des Kraftwerks gewonnen wird und zu den Vorheizvorrichtungen geführt wird und dass der gewonnene Dampf entsprechend der Belastung des Kraftwerks verringert oder vollständig vermieden wird, um so den gesamten Dampf, welcher durch den Abfallverbrennungsreaktor (1') in den Vorheizvorrichtungen erzeugt wird, zu absorbieren.

2. Verfahren nach Anspruch 1, **dadurch gekennzeichnet, dass** die Temperatur des Dampfes zwischen 300° C und 500° C für die Übertragung der Wärme auf die Hochdruck-Vorheizvorrichtungen und vorzugsweise bei ungefähr 400° C liegt, und dass ein Druck, welcher mit demjenigen kompatibel ist, der in den Vorheizvorrichtungen und in dem Abfallverbrennungsreaktor (1') erzielt werden kann, typischerweise bei ungefähr 4 Mpa (40 bar) liegt.

3. Verfahren nach einem der vorhergehenden Ansprüche, **dadurch gekennzeichnet, dass** der Abfall in dem Verbrennungsreaktor mit einer konstanten Belastung und mit einer Produktion einer vorbestimmten Menge von heißen Verbrennungsgasen und Dampf verbrannt wird, wohingegen das Kraftwerk mit einer variablen Belastung gemäß den Marktanforderungen für Energie arbeitet.

4. Verfahren nach einem der vorhergehenden Ansprüche, **dadurch gekennzeichnet, dass** die maximale Menge von Dampf, weiche den Vorheizvorrichtungen zugeführt werden kann, derart definiert ist, dass nicht die Kondensationsprodukte, welche bei einer Temperatur in der Nähe derjenigen einer Verdampfung in dem Kreislauf zu dem Kessel zurückgeführt werden, erwärmt werden, wobei die minimalen Belastungsbedingungen des Kraftwerks besonders berücksichtigt werden.

5. Verfahren nach einem der vorhergehenden Ansprüche, **dadurch gekennzeichnet, dass** der Abfall ohne überschüssige Luft oder mit überschüssiger Luft in einem Bereich von ungefähr 0-200 % und typischerweise bei 70 % verbrannt wird.

6. Verfahren nach Anspruch 1, **dadurch gekennzeichnet, dass** die Reinigung der Abgase mittels einer Neutralisation mit einer Base und einem anschließenden Filtern ausgeführt wird.

7. Verfahren nach Anspruch 1, **dadurch gekennzeichnet, dass** die gekühlten und gereinigten Abgase mit der Verbrennungsluft des Kraftwerks gemischt werden, um so zumindest teilweise ein Zurückführen der Verbrennungsgase des Kraftwerks zu ersetzen, was auf eine Verringerung des NOx abzielt.

8. Verfahren nach Anspruch 1, **dadurch gekennzeichnet, dass** die Phase der Reinigung der Abgase ausgeführt wird, bis eine Zusammensetzung von Staub, anorganischen Säureverbindungen, kondensierten aromatischen polycyclischen Verbindungen und chlorierten organischen Verbindungen erreicht wird, welche unterhalb der vorbestimmten Schwellenwerte liegt und kompatibel mit einer Ableitung in die Umwelt ist.

9. Verfahren nach Anspruch 1, **dadurch gekennzeichnet, dass** der Abfall vor seiner Verbrennung einer vorherigen Bearbeitung unterzogen wird, um einen sekundären Brennstoff (SF) herzustellen.

10. Verfahren nach Anspruch 9, **dadurch gekennzeichnet, dass** die Vorbearbeitung des sekundären Brennstoffs (SF) zumindest eine Phase einer Entnahme von Metallen und/oder Ballastmaterial aus dem Abfall umfasst.

11. Verfahren nach Anspruch 10, **dadurch gekennzeichnet, dass** die Vorbearbeitung des sekundären Brennstoffs (SF) eine Phase einer erzwungenen aeroben Digestion des Brennstoffs umfasst.

12. Kraftwerk für die Verwendung von Abfall in einem thermoelektrischen Kraftwerk (100), wobei das Kraftwerk umfasst:
- eine primäre Brennkammer (101) für fossilen Brennstoff,
- einen Kreislauf zur Zuführung von Brennluft bei einer vorbestimmten Temperatur,
- eine mehrstufige Dampfturbine (103),
- Vorheizvorrichtungen (105, 106),
- eine Abfallverbrennungsanlage (1),
und wobei das Abfallkraftwerk umfasst:
- Mittel für die Vorbereitung des Abfalls zur Verbrennung;
- Mittel für die Verbrennung des Abfalls, welche beispielsweise aus einem Wirbelbett-Verbrennungsreaktor (1') mit einem Kreislauf zum Kühlen mittels einer Zirkulation eines Kühl-Fluids bestehen;
- Mittel zum Kühlen der Abgase auf eine Temperatur, welche geringer als die maximale Temperatur ist, die für eine Reinigung geeignet ist;
- Mittel zur Reinigung der gekühlten Abgase;
- Mittel zum Mischen der gereinigten und gekühlten Abgase mit der Brennluft des Kraftwerks,
- Mittel für die Herstellung von unter Druck stehendem Dampf, und
- Mittel, um den unter Druck stehenden Dampf von dem Abfallverbrennungsreaktor (1') in die Vorheizvorrichtungen zu schicken, um das Wasser zu erhitzen, welches der primären Brennkammer (101) zugeführt wird,
**dadurch gekennzeichnet, dass** das Kraftwerk darüber hinaus umfasst:
- Mittel um den Dampf von der Turbine (103) zu gewinnen und ihn zu den Vorheizvorrichtungen (105, 106) zu führen, und
- Mittel, um Entnahmen von der Turbine des Kraftwerks entsprechend einer Belastung graduell abzusenken, um den gesamten unter Druck stehenden Dampf, welcher von dem Abfallverbrennungsreaktor (1') in den Vorheizvorrichtungen erzeugt wird, zu absorbieren.

13. Kraftwerk nach Anspruch 12, **dadurch gekennzeichnet, dass** es Mittel zum Zuführen von Luft zu einem Wirbelbett-Verbrennungsreaktor (1') zur Verbrennung von Abfall, Mittel zur Steuerung der Zufuhrmittel, um die überschüssige Luft in einem Bereich von 0 bis 200 % ungefähr bei 70 % zu verändern, umfasst.

14. Kraftwerk nach Anspruch 12, **dadurch gekennzeichnet, dass** die Mittel zum Mischen der gereinigten und gekühlten Abgase mit der Brennluft der Hauptbrennkammer (101) des Kraftwerks aufgebaut sind, um zumindest teilweise die Zurückführung der Verbrennungsgase zu ersetzen, um eine Verringerung des NOx zu erzielen.

15. Kraftwerk nach Anspruch 12, **dadurch gekennzeichnet, dass** die Reinigungsmittel Filtermittel umfassen.

16. Kraftwerk nach Anspruch 12, **dadurch gekennzeichnet, dass** die Mittel für die Vorbereitung des Abfalls Mittel für die Vorbereitung eines sekundären Brennstoffs (SF) von dem Abfall umfassen.

17. Kraftwerk nach Anspruch 17, **dadurch gekennzeichnet, dass** die Mittel für die Vorbereitung des sekundären Brennstoffs eine Anlage für eine erzwungene aerobe Gärung des Abfalls umfassen.

## Revendications

1. Procédé pour l'utilisation de déchets, en particulier des déchets solides municipaux, dans une centrale thermoélectrique (100), dans lequel l'énergie principale est alimentée par la combustion de combustibles fossiles, dans lequel les déchets sont brûlés dans un réacteur à combustion (1') avec un débit d'air contrôlé de manière appropriée, les gaz de combustion étant refroidis et purifiés et lesdits gaz de combustion purifiés étant mélangés avec l'air utilisé dans ladite centrale électrique, et dans lequel la vapeur sous pression est produite par ledit réacteur de combustion de déchets, la vapeur sous pression étant produite à des températures telles qu'elles permettent le transfert de chaleur aux préchauffeurs à haute pression (106) pour chauffer l'eau alimentant la chaudière (101) de ladite centrale (100), **caractérisé en ce que** ladite vapeur est extraite de la turbine de la centrale et passe par lesdits préchauffeurs et, selon la charge de la centrale, ladite vapeur extraite est réduite ou totalement éliminée afin d'absorber toute la vapeur produite par ledit réacteur de combustion de déchets (1') dans lesdits préchauffeurs.

2. Procédé selon la revendication 1, **caractérisé en ce que** ladite température de ladite vapeur est comprise entre 300 °C et 500 °C pour le transfert de chaleur aux préchauffeurs à haute pression et de préférence environ 400 °C et à une pression compatible avec celle qui peut être obtenue dans lesdits préchauffeurs et dans ledit réacteur de combustion de déchets (1'), typiquement environ 4 MPa (40 bars).

3. Procédé selon l'une quelconque des revendications précédentes, dans lequel les déchets sont brûlés dans ledit réacteur de combustion à une charge constante et avec la production d'une quantité prédéterminée de gaz de combustion chauds et de vapeur alors que la centrale électrique fonctionne à une charge variable selon les demandes du marché pour l'énergie.

4. Procédé selon l'une quelconque des revendications précédentes, dans lequel la quantité maximum de vapeur qui peut être alimentée auxdits préchauffeurs est telle qu'elle ne chauffe pas les condensats recyclés dans la chaudière à une température proche de celle de l'évaporation dans le circuit, avec une référence particulière aux conditions de charge minimum de la centrale électrique.

5. Procédé selon l'une quelconque des revendications précédentes, **caractérisé en ce que** les déchets sont brûlés sans air excessif ou avec un air excessif dans une plage égale à approximativement 0 - 200 % et typiquement environ 70 %.

6. Procédé selon la revendication 1, **caractérisé en ce que** ladite purification de gaz de combustion est réalisée au moyen de la neutralisation avec une base et une filtration successive.

7. Procédé selon la revendication 1, **caractérisé en ce que** les gaz de combustion refroidis et purifiés sont mélangés avec l'air de combustion de la centrale électrique afin de remplacer au moins en partie le recyclage des gaz de combustion de la centrale électrique, ayant pour but de réduire les NOx.

8. Procédé selon la revendication 1, **caractérisé en ce que** ladite phase de purification des gaz de combustion est réalisée jusqu'à obtenir un contenu de poussière, de composés d'acide inorganique, de composés polycycliques aromatiques condensés et de composés organiques chlorés inférieurs aux valeurs de seuil prédéterminées et compatibles avec les émissions dans l'environnement.

9. Procédé selon la revendication 1, **caractérisé en ce que** les déchets sont soumis à un traitement préliminaire avant leur combustion afin de préparer un combustible secondaire (SF).

10. Procédé selon la revendication 9, **caractérisé en ce que** le prétraitement dudit combustible secondaire (SF) comprend au moins une phase d'extraction des métaux et/ou d'un matériau inerte des déchets.

11. Procédé selon la revendication 10, **caractérisé en ce que** le prétraitement dudit combustible secondaire (SF) comprend une phase de digestion aérobie forcée des déchets.

12. Centrale pour l'utilisation des déchets dans une centrale thermoélectrique (100), dans laquelle la centrale comprend :
- une chambre de combustion principale (101) pour le combustible fossile,
- un circuit pour alimenter de l'air comburant à une température prédéterminée,
- une turbine de vapeur à plusieurs étages (103),
- des préchauffeurs (105, 106)
- une centrale de combustion de déchets (1),
et dans laquelle ladite centrale de déchets comprend :
- des moyens pour la préparation des déchets pour la combustion ;
- des moyens pour la combustion des déchets se composant par exemple d'un réacteur de combustion à lit fluidisé (1') avec un circuit pour le refroidissement au moyen de la circulation d'un fluide de refroidissement ;
- des moyens pour refroidir les gaz de combustion à une température inférieure à la température maximum compatible avec la purification ;
- des moyens pour la purification desdits gaz de combustion refroidis ;
- des moyens pour mélanger lesdits gaz de combustion purifiés et refroidis avec l'air de combustion de la centrale électrique,
- des moyens pour la production de vapeur sous pression, et
- des moyens pour envoyer ladite vapeur sous pression dudit réacteur de combustion de déchets (1') dans lesdits préchauffeurs pour chauffer l'eau qui alimente ladite chambre de combustion principale (101), **caractérisée en ce que** ladite centrale comprend en outre :
- des moyens pour extraire la vapeur de ladite turbine (103), et la faire passer dans lesdits préchauffeurs (105, 106), et
- des moyens pour l'arrêt progressif des extractions de la turbine de la centrale, selon la charge, afin d'absorber toute la vapeur sous pression produite par ledit réacteur de combustion de déchets (1') dans lesdits préchauffeurs.

13. Centrale selon la revendication 12, **caractérisée en ce qu'**elle comprend des moyens pour alimenter de l'air à un réacteur de combustion à lit fluidisé (1') de combustion de déchets, des moyens pour réguler lesdits moyens d'alimentation afin de modifier l'air en excès dans une plage comprise entre 0 et 200 % et approximativement égale à 70 %.

14. Centrale selon la revendication 12, **caractérisée en ce que** lesdits moyens pour mélanger les gaz de combustion purifiés et refroidis avec l'air de combustion de la chambre de combustion principale (101) de la centrale électrique sont réglés pour remplacer au moins une partie du recyclage des gaz brûlés de combustion, ayant pour but de réduire les NOx.

15. Centrale selon la revendication 12, **caractérisée en ce que** lesdits moyens de purification comprennent des moyens de filtration.

16. Centrale selon la revendication 12, **caractérisée en ce que** lesdits moyens pour la préparation des déchets comprennent des moyens pour la préparation d'un combustible secondaire (SF) provenant desdits déchets.

17. Centrale selon la revendication 17, **caractérisée en ce que** lesdits moyens pour la préparation dudit combustible secondaire comprennent une centrale pour la fermentation aérobie forcée desdits déchets.
